# EUROPEAN PATENT APPLICATION

(11) **EP 4 516 847 A1**
(43) Date of publication of application: **05.03.2025**
(21) Application number: 23795982.0
(22) Date of filing: 27.03.2023
(51) Int. Cl.: C08J 7/00, B29C 45/00, C08J 5/00

(54) **AROMATIC POLYETHER KETONE MOLDED BODY AND PRODUCTION METHOD THEREFOR**

(30) Priority: 27.04.2022 JP 2022073067
(71) Applicant: Kabushiki Kaisha Riken, Tokyo 102-8202 (JP)
(72) Inventor: MAKABE, Takeshi, Kumagaya-shi, Saitama 360-8522 (JP)
(74) Representative: Lorenz & Kollegen
(86) International application number: PCT/JP2023/012216
(87) International publication number: WO 2023/210235

(57) **Abstract**

[Object] To provide a technology capable of further improving the performance of an aromatic polyetherketone molded body.

[Solving Means] An aromatic polyetherketone molded body includes: a body portion; and a surface layer portion covering the body portion. An infrared absorption spectrum is obtained by measurement using an infrared spectrophotometer for both the body portion and the surface layer portion, the infrared absorption spectrum including a peak A and a peak B, the peak A appearing in a wavenumber range of 1295 to 1340 cm⁻¹, the peak B appearing in a wavenumber range of 1265 to 1295 cm⁻¹. A ratio A'/B' of strength A' of the peak A to strength B' of the peak B is higher in the surface layer portion than in the body portion.

## Description

### Technical Field

The present invention relates to an aromatic polyetherketone molded body that can be used for various parts and a method of producing the same.

### Background Art

In the field of industrial machinery, there is a demand to replace a metal part with a resin molded body from the viewpoint of weight reduction, or the like. Super engineering plastics having particularly excellent heat resistance and mechanical strength, typified by polyetheretherketone (PEEK), are used for the production of such a resin molded body (see, for example, Patent Literature 1).

### Citation List

### Patent Literature

Patent Literature 1: Japanese Patent Application Laid-open No. 2011-111091

### Disclosure of Invention

### Technical Problem

In the resin molded body, rapid cooling of a mold after molding is necessary for shortening the tact time, but the rapid cooling of a mold tends to reduce the strength in the vicinity of the surface where crystallization is likely to be hindered. In order to sufficiently progress crystallization in the vicinity of the surface of the resin molded body, the resin molded body can be further subjected to heat treatment such as annealing treatment.

However, since the tact time becomes longer and a large amount of electric power is necessary by subjecting the resin molded body to heat treatment, the production cost of the resin molded body increases. Further, during heat treatment, large dimensional changes occur in the resin molded body due to overall shrinkage. For this reason, it is necessary to design a mold or the like taking into account the dimensional changes due to heat treatment.

In view of the circumstances as described above, it is an object of the present invention to provide a technology capable of further improving the performance of an aromatic polyetherketone molded body. Solution to Problem

In order to achieve the above-mentioned object, an aromatic polyetherketone molded body according to an embodiment of the present invention includes: a body portion; and a surface layer portion covering the body portion.

An infrared absorption spectrum is obtained by measurement using an infrared spectrophotometer for both the body portion and the surface layer portion, the infrared absorption spectrum including a peak A and a peak B, the peak A appearing in a wavenumber range of 1295 to 1340 cm⁻¹, the peak B appearing in a wavenumber range of 1265 to 1295 cm⁻¹.

A ratio A'/B' of strength A' of the peak A to strength B' of the peak B is higher in the surface layer portion than in the body portion.

In this aromatic polyetherketone molded body, the degree of crystallization is made higher in the surface layer portion forming the surface than in the body portion inside the surface layer portion. As a result, in this aromatic polyetherketone molded body, since high mechanical strength is obtained in the surface layer portion, it is possible to suppress the progress of wear and the occurrence of chipping.

Meanwhile, in this aromatic polyetherketone molded body, since shock absorbing properties are maintained in the body portion where the degree of crystallization is not increased, an impact applied to the surface layer portion is absorbed by the body portion. As a result, in this aromatic polyetherketone molded body, since large stress is unlikely to be locally applied to the surface layer portion, it is possible to further suppress the occurrence of damage.

The aromatic polyetherketone molded body may be formed of at least one of polyetheretherketone or polyetherketone.

The aromatic polyetherketone molded body may be formed of an aromatic polyetherketone including an additive.

The aromatic polyetherketone molded body may be configured as a sliding member.

The aromatic polyetherketone molded body may be configured as a gear member.

A method of producing an aromatic polyetherketone molded body according to an embodiment of the present invention includes the steps of: preparing a molded body from which an infrared absorption spectrum is obtained by measurement using an infrared spectrophotometer, the infrared absorption spectrum including a peak A and a peak B, the peak A appearing in a wavenumber range of 1295 to 1340 cm⁻¹, the peak B appearing in a wavenumber range of 1265 to 1295 cm⁻¹; and applying an electron beam to a surface of the molded body.

The step of applying an electron beam may include increasing a ratio A'/B' of strength A' of the peak A to strength B' of the peak B in a surface layer portion of the molded body.

The step of applying an electron beam may include heating the molded body.

In these configurations, the application of an electron beam allows the degree of crystallization to increase selectively only in the surface layer portion forming the surface of the aromatic polyetherketone molded body.

### Advantageous Effects of Invention

As described above, in the present invention, it is possible to provide a technology capable of further improving the performance of an aromatic polyetherketone molded body.

### Brief Description of Drawings

[Fig. 1] Fig. 1 is a flowchart showing a method of producing a resin molded body according to an embodiment of the present invention.
[Fig. 2] Fig. 2 is a diagram showing an example of an infrared absorption spectrum of the resin molded body.
[Fig. 3] Fig. 3 is a graph showing a change a ratio A'/B' depending on an irradiation dose of an electron beam.
[Fig. 4] Fig. 4 is a plan view showing an example in which the resin molded body is configured as a gear member.

### Mode(s) for Carrying Out the Invention

### [Description of aromatic polyetherketone molded body]

The present invention relates to an aromatic polyetherketone molded body that is a resin molded body formed of an aromatic polyetherketone. The aromatic polyetherketone is a resin including a benzene ring, an ether, and a ketone. Typical examples thereof include polyetheretherketone (PEEK) having excellent heat resistance and mechanical strength.

Note that examples of the aromatic polyetherketone capable of forming the resin molded body according to the present invention include polyetherketone (PEK), polyetherketoneketone (PEKK), polyetheretherketoneketone (PEEKK), and polyetherketoneetherketoneketone (PEKEKK), in addition to PEEK. Further, the aromatic polyetherketone forming the resin molded body according to the present invention may have a configuration in which a plurality of types is blended.

Further, the resin molded body according to the present invention may be formed of an aromatic polyetherketone including an additive. In the resin molded body, it is possible to further improve the performance using the additive. Examples of the additive that can be used in the present invention include a fibrous filler, a non-fibrous filler, and a solid lubricant.

Examples of the fibrous additive include carbon fiber, nanocarbon (carbon nanotube or carbon nanowire), and glass fiber. Examples of the non-fibrous filler include graphite, mica, talc, and alumina. Examples of the solid lubricant include polytetrafluoroethylene(PTFE) and a tetrafluoroethylene/perfluoroalkylvinylether copolymer (PFA) .

In the present invention, the performance of the resin molded body is improved by controlling the degree of crystallization of the aromatic polyetherketone forming the resin molded body. In accordance with an embodiment of the present invention, the degree of crystallization of the aromatic polyetherketone is determined from an infrared absorption spectrum obtained by measurement of an infrared spectrophotometer.

Specifically, the infrared absorption spectrum is obtained as a graph with a wavenumber as the horizontal axis and absorbance as the vertical axis, which is obtained by measuring absorbance while changing the wavenumber in a continuous manner by the infrared spectrophotometer. The absorbance of the resin molded body according to this embodiment is measured within a wavenumber range including at least 1265 to 1340 cm⁻¹.

The infrared absorption spectrum of the aromatic polyetherketone includes a peak A appearing in a wavenumber range of 1295 to 1340 cm⁻¹ and a peak B appearing in a wavenumber range of 1265 to 1295 cm⁻¹. In the aromatic polyetherketone, the higher the degree of crystallization, the higher the peak A to the peak B is relatively.

Therefore, the degree of crystallization of the aromatic polyetherketone is evaluated by a ratio A'/B' of strength A' obtained as the height of the peak A to strength B' as the height of the peak B. That is, it can be seen that in the aromatic polyetherketone, the larger the ratio A'/B', the higher the degree of crystallization, and the smaller the ratio A'/B', the lower the degree of crystallization.

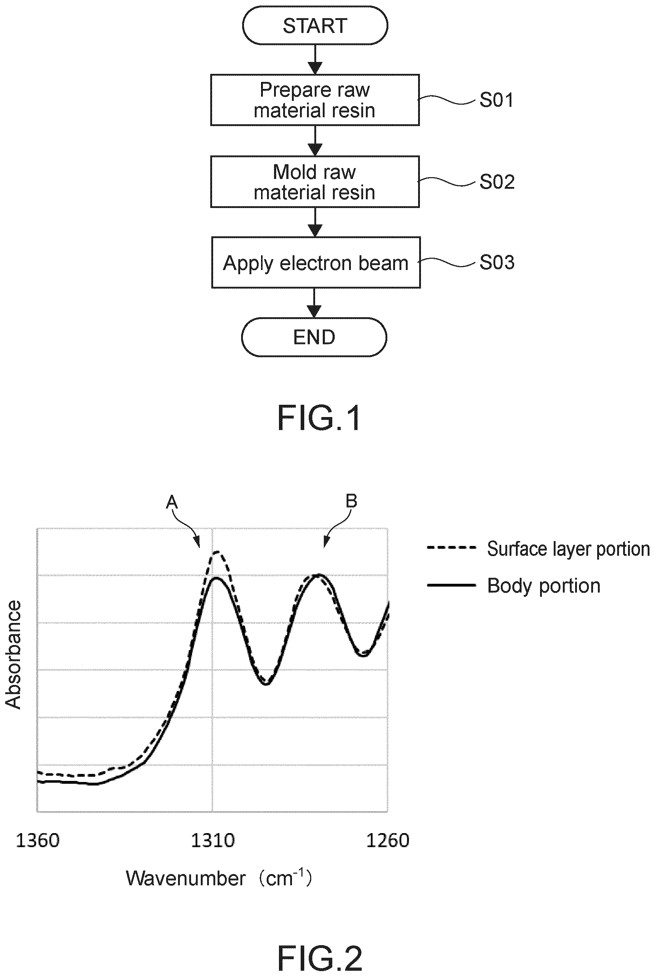

Fig. 1 is a flowchart showing a method of producing a resin molded body according to this embodiment. First, in Step S01 of the production method according to this embodiment, a raw material resin is prepared. As the raw material resin prepared in Step S01, for example, commercial products configured as pellets, powder, or the like of the aromatic polyetherketone can be used.

Next, in Step S02, the raw material resin prepared in Step S01 is molded. For molding of the raw material resin, for example, a known molding method such as injection molding and extrusion molding can be used. In Step S02, the tact time can be shortened by rapidly cooling the mold before the stage taking out the molded body of the raw material resin after molding. Note that in Step S02, the molded body of the raw material resin taken out from the mold may be subjected to processing for modifying the shape, such as cutting and grinding.

Then, in Step S03, an electron beam is applied to the entire surface of the molded body of the raw material resin obtained in Step S02. As a result, in the molded body of the raw material resin, the electron beam that has entered the surface promotes crystallization of the amorphous portion in the aromatic polyetherketone forming the vicinity of the surface and increases the degree of crystallization in the vicinity of the surface.

As a result, in Step S03, application of an electron beam obtains a resin molded body that includes a surface layer portion whose degree of crystallization has been increased and a body portion that is located on the inner side of the surface layer portion and is not affected by the application of an electron beam. In the resin molded body after Step S03, the degree of crystallization immediately after Step S02 is maintained in the body portion covered with the surface layer portion.

Fig. 2 shows an example of an infrared absorption spectrum of the surface layer portion and the body portion in the resin molded body according to this embodiment. The infrared absorption spectrum of the surface layer portion is obtained by, for example, measurement of absorbance of the surface of the resin molded body. The infrared absorption spectrum of the body portion is obtained by, for example, measurement of absorbance of a cross section obtained by cutting the resin molded body to expose the body portion.

Fig. 2 shows the absorption spectrum of the surface layer portion by a broken line and the absorption spectrum of the body portion by a solid line. While the strengths B' of the peak B are equivalent to each other between the surface layer portion and the body portion, the strength A' of the peak A is higher in the surface layer portion than in the body portion. That is, in the resin molded body according to this embodiment, the ratio A'/B' of the strengths A' and B' is larger in the surface layer portion than in the body portion.

In the resin molded body, if the history of the energy applied to the entire body is uniform, equivalent absorption spectra should be obtained from the surface layer portion and the body portion. In this regard, in the resin molded body according to this embodiment, since only the peak A is higher in the surface layer portion than in the body portion, it can be seen that the degree of crystallization is increased only in the surface layer portion.

In particular, in the molded body of the raw material resin immediately after Step S02, when the mold is rapidly cooled as described above, crystallization of the surface layer portion adjacent to the mold does not progress sufficiently and many amorphous portions remain in many cases. In this regard, in this embodiment, crystallization of the surface layer portion can be sufficiently progressed and the degree of crystallization of the surface layer portion can be made higher than in the body portion in Step S03.

In the resin molded body according to this embodiment, by increasing the degree of crystallization of the surface layer portion, it is possible to increase the mechanical strength in the vicinity of the surface where large stress is likely to be applied from the outside. As a result, in the resin molded body according to this embodiment, it is possible to suppress the progress of wear and the occurrence of chipping in the vicinity of the surface formed by the surface layer portion.

Further, in the resin molded body according to this embodiment, since the shock absorbing properties in the body portion that is not affected by the application of an electron beam are maintained, an impact to be applied to the surface layer portion is absorbed well. As a result, in the resin molded body according to this embodiment, since large stress is less likely to be locally applied to the surface layer portion, it is possible to further effectively suppress the occurrence of damage.

As described above, in the resin molded body according to this embodiment, it is possible to increase only the mechanical strength of the surface layer portion without increasing the mechanical strength of the body portion by applying an electron beam. As a result, in the resin molded body according to this embodiment, the effect of suppressing the occurrence of damage by the synergistic effect between the surface layer portion and the body portion can be achieved.

Further, in the resin molded body according to this embodiment, the portion in which the degree of crystallization is changed by application of an electron beam is limited only to the surface layer portion, and the degree of crystallization of the body portion, which occupies the majority thereof, is not changed. For this reason, in this resin molded body, the amount of shrinkage due to the progress of crystallization after molding remains small, and dimensional changes from the shape immediately after molding can be kept small.

The thickness of the surface layer portion in the resin molded body according to this embodiment can be appropriately determined in accordance with the application or the like. For example, from the viewpoint of more reliably achieving the above effect of the surface layer portion, it is favorable to set the thickness of the surface layer portion to 50 µm or more. Meanwhile, from the viewpoint of more effectively achieving the shock absorbing properties of the body portion, it is favorable to limit the thickness of the surface layer portion to 700 µm or less.

The thickness of the surface layer portion in the resin molded body can be controlled in various ways by changing the conditions for applying an electron beam. However, since large-scale equipment is necessary to increase the thickness of the surface layer portion, it is favorable to limit the thickness of the surface layer portion to 700 µm or less from the viewpoint of keeping the production cost low without using large-scale equipment.

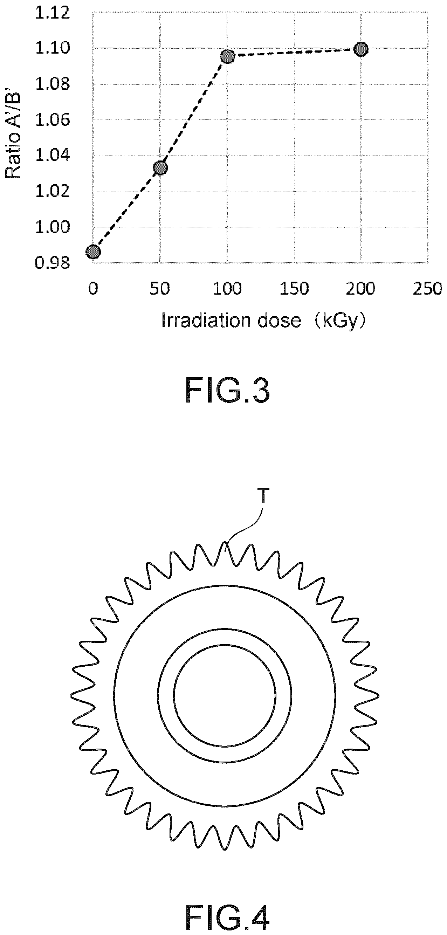

Fig. 3 is a graph plotting the ratio A'/B' of the surface layer portion when changing the irradiation dose of an electron beam in Step S03. Note that in all plots in Fig. 3, the other conditions for applying an electron beam and the configuration of the molded body of the raw material resin were common. Further, the plot of the zero irradiation dose in Fig. 4 indicates the condition for applying no electron beam.

As shown in Fig. 3, it can be seen that the effect of promoting crystallization described above is easily achieved by setting the irradiation dose of an electron beam to 50 kGy or more. Meanwhile, when the irradiation dose of an electron beam is too large, the decomposition of the molecular chain of the aromatic polyetherketone progresses. For this reason, it is favorable to limit the irradiation dose of an electron beam to 200 kGy or less.

Further, in Step S03, it is favorable to apply an electron beam while heating the molded body of the raw material resin. This makes it easier for the resin molded body to achieve the effect of improving the mechanical strength of the surface layer portion, e.g., it is possible to further improve the fracture properties. It is favorable to set the temperature of the molded body of the raw material resin during application of an electron beam to, for example, 200°C or more.

The resin molded body according to this embodiment is particularly suitable for application to a part where stress is likely to concentrate on the surface. Examples of such a part include a sliding member such as a gear member, a seal ring, a thrust washer, and a bearing. In the resin molded body configured as a sliding member, it is possible to suppress the occurrence of damage and reduce the friction loss.

Fig. 4 shows a gear member as an application example of a sliding member of the resin molded body according to this embodiment. In the gear member, stress tends to concentrate at the tooth roots of a plurality of teeth T arranged along the outer periphery, but the occurrence of chipping of the teeth T can be effectively suppressed by configuring the resin molded body according to this embodiment.

### [Examples and Comparative Examples]

### (Description of overview)

Examples and Comparative Examples of the above embodiment will be described. In Examples 1 to 8 and Comparative Examples 1 and 2, samples of resin molded bodies were prepared, and each of the samples was evaluated. An electron beam was applied to the molded body of the raw material resin in all Examples 1 to 8, and no electron beam was applied to the molded body of the raw material resin in both Comparative Examples 1 and 2.

In all Examples 1 to 3 and 5 to 8 and Comparative Examples 1 and 2, PEEK was used as a raw material resin. Specifically, "VESTAKEEP (registered trademark) 4000G" manufactured by Daicel-Evonik Ltd. was used. Further, in Example 4, PEK was used as a raw material resin. Specifically, "VICTREX (registered trademark) HT" manufactured by Victrex plc. was used. Further, in Example 5, 20 weight% of carbon fiber and 10 weight% of PTFE were contained in the raw material resin as additives.

### (Examples 1 to 5)

In all Examples 1 to 5, an electron beam was applied at room temperature. Further, in Examples 1 to 3, an electron beam was applied at irradiation doses different from each other. Specifically, the irradiation dose was set to 50 kGy in Example 1, the irradiation dose was set to 100 kGy in Example 2, and the irradiation dose was set to 200 kGy in Example 3. Further, the irradiation dose was set to 100 kGy in Example 4, and the irradiation dose was set to 200 kGy in Example 5.

In all Examples 1 to 5, for the application of an electron beam to the molded body of the raw material resin, "EC300/30/30mA" manufactured by IWASAKI ELECTRIC CO., LTD was used. The conditions for applying an electron beam in all Examples 1 to 4 were an acceleration voltage of 290 kV, a beam current of 6.3 mA, and a conveying speed of 8 m/min.

All the samples according to Examples 1 to 5 had a common configuration except for the configuration described above. Further, as the sample according to Comparative Example 1, the molded body of the raw material resin before applying an electron beam in the samples according to Examples 1 to 3 was used. The absorbances of the surface layer portion and the body portion of the samples according to Examples 1 to 5 and Comparative Example 1 were measured using an infrared spectrophotometer. The absorbance was measured by an ATR method with a Ge lens using a Fourier transformation infrared spectrophotometer "FT/IR-4600" manufactured by JASCO Corporation.

The ratio A'/B' was calculated from each infrared absorption spectrum obtained by measurement of absorbance. Table 1 shows the ratio A'/B' of the surface layer portion and the body portion in Examples 1 to 5 and Comparative Example 1. While the ratios A'/B' were equal to each other between the surface layer portion and the body portion in Comparative Example 1, the ratio A'/B' was higher than in the surface layer portion than in the body portion in all Examples 1 to 5.

Next, in order to evaluate wear properties, a wear resistance test was conducted on each of the samples according to Examples 1 to 5 and Comparative Example 1. In the wear resistance test, a reciprocating sliding friction-wear tester "TRIBOGEAR TYPE-14" manufactured by Shinto Scientific Co., Ltd. was used. In the wear resistance test, each sample was formed into a strip shape of 10 mm × 80 mm × 0.1 mm.

Further, in the wear resistance test of each sample, a conical indenter (formed of sapphire, an included angle of 90°, a tip curvature radius of 0.05 mm) was used, the load was set to 150 gf, the sliding speed was set to 300 mm/min, the moving distance was set to 10 mm, and other conditions were also common. For each sample, "OK" and "NG" were determined by the presence or absence of the wear of 100 µm or more.

Table 1 shows the results for each number of reciprocations (10 reciprocations, 20 reciprocations, 30 reciprocations, 40 reciprocations, and 50 reciprocations) in Examples 1 to 5 and Comparative Example 1. As shown in Table 1, in each of the samples according to Examples 1 to 5, good results were obtained up to 50 reciprocations, and wear resistance higher than that of the sample according to Comparative Example 1, which was determined as "NG", was obtained for 40 or more reciprocations.

Next, in order to evaluate the fracture properties, a tensile test was conducted on each of the samples according to Examples 1 to 3 and Comparative Example1. In the tensile test, "AGX" manufactured by Shimadzu Corporation was used. In the tensile test, each sample was formed into an A12 type dumbbell shape conforming to JIS K7139 (2009). In the tensile test for each sample, the tensile speed was set to 10 mm/min and the other conditions were also common.

As a result, Table 1 shows the breaking strength as the change rate (%) in Examples 1 to 3 with reference to Comparative Example 1. As shown in Table 1, it can be seen that all samples according to Examples 1 to 3 had higher breaking strength than the sample according to Comparative Example 1 and high breaking strength is obtained by the effect of the surface layer portion.

Next, in order to evaluate the fracture properties, a tear test was conducted on each of the samples according to Examples 1 to 3 and Comparative Example 1. In the tear test, "AGX" manufactured by Shimadzu Corporation was used. In the tear test, each sample was formed into a strip shape (with a 1 mm notch) of 10 mm × 80 mm × 0.1 mm. In the tear test for each sample, the tensile speed was set to 10 mm/min and the other conditions were also common.

As a result, Table 1 shows the tear stroke as the change rate (%) in Examples 1 to 3 with reference to Comparative Example 1. As shown in Table 1, it can be seen that in all samples according to the Examples 1 to 3, the tear stroke is higher than that of the sample according to the Comparative Example and a large tear stroke is achieved by the effect of the surface layer portion.

Next, in order to evaluate friction properties as a sliding member, a friction test was conducted on each of the samples according to Examples 1 to 3 and Comparative Example 1. In the friction test, a reciprocating sliding friction-wear tester "TRIBOGEAR TYPE-14" manufactured by Shinto Scientific Co., Ltd. was used. In the friction test, each sample was formed into a strip shape of 10 mm × 80 mm × 0.1 mm.

Further, in the friction test of each sample, a spherical indenter (formed of SUS, ϕ4 mm) was used, the load was set to 100 gf, the sliding speed was set to 600 mm/min, the moving distance was set to 20 mm, and the other conditions were also common. Further, grease (Sumitec F931) was used to lubricate the sliding surface on which the indenter slides in each sample.

As a result, Table 1 shows the dynamic friction coefficient as the change rate (%) in Examples 1 to 3 with reference to Comparative Example 1. As shown in Table 1, it can be seen that in each of the samples according to Examples 1 to 3, the dynamic friction coefficient was lower than that of the sample according to Comparative Example and high sliding properties as a sliding member is achieved by the effect of the surface layer portion.

Next, in order to evaluate the fatigue features as a gear member, a gear fatigue test was conducted on each of the samples according to Examples 1 to 3 and Comparative Example 1. In the gear fatigue test, each sample was formed into a gear shape. In the gear fatigue test of each sample, a gear member (formed of S45C) was used as a mating material and the sample was driven to rotate while mating with the mating material.

Further, in the gear fatigue test of each sample, the rotational speed was set to 2000 rpm, the torque was set to 6 N·m, and the other conditions were also common. The lubrication state between each sample and the mating material during the rotational driving was dry. For each sample, "OK" and "NG" were determined by the presence or absence of tooth chipping after 200,000 rotations.

Table 1 shows the results of the gear fatigue test in Examples 1 to 3 and Comparative Example 1. As shown in Table 1, while no tooth chipping occurred in all samples according to Examples 1 to 3, tooth chipping occurred in the sample according to Comparative Example 1. As a result, it can be seen that in Examples 1 to 3, high fatigue properties as a gear member can be achieved.

**(Table 1)**

| | | Comparative Example 1 | Example 1 | Example 2 | Example 3 | Example 4 | Example 5 |
|---|---|---|---|---|---|---|---|
| Raw material resin | | PEEK | PEEK | PEEK | PEEK | PEK | PEEK +Additive |
| Irradiation conditions | Irradiation dose | - | 50kGv | 100kGy | 200kGv | 100kGy | 200kGy |
| | Temperature | - | Room temperature | Room temperature | Room temperature | Room temperature | Room temperature |
| Ratio A'/B' | Surface layer portion | 0.99 | 1.03 | 1.1 | 1.1 | 1.08 | 1.08 |
| | Body portion | 0.99 | 0.99 | 0.99 | 0.99 | 1.04 | 1.02 |
| Wear properties | 10 reciprocations | OK | OK | OK | OK | OK | OK |
| | 20 reciprocations | OK | OK | OK | OK | OK | OK |
| | 30 reciprocations | OK | OK | OK | OK | OK | OK |
| | 40 reciprocations | NG | OK | OK | OK | OK | OK |
| | 50 reciprocations | NG | OK | OK | OK | OK | OK |
| Fracture properties | Tear stroke | Reference | +2.4% | +23.8% | +4.8% | - | - |
| | Breaking strength | Reference | +8.0% | +9.0% | +2.6% | - | - |
| Friction properties | Dynamic friction coefficient | Reference | -24.2% | -13.6% | -22.7% | - | - |
| Product properties | Gear fatigue test | NG | OK | OK | OK | - | - |

### (Examples 6 to 8)

In Examples 6 to 8, the sample temperature during application of an electron beam was changed from that in Example 2. Specifically, the sample temperature was set to 200°C in Example 6, the sample temperature was set to 250°C in Example 7, and the sample temperature was set to 300°C in Example 8. Further, in all Examples 6 to 8, the irradiation dose of an electron beam was set to 100 kGy, similarly to Example 2.

That is, the conditions for applying an electron beam in Examples 6 to 8 are different from those in Example 2 in which the sample temperature is room temperature in that the sample is heated. In order to evaluate the fracture properties, a tensile test was conducted on each of the samples according to Examples 6 to 8. The conditions of the tensile test were the same as those in the above Examples 1 to 3 and Comparative Example 1.

As a result, Table 2 shows the breaking strength as the change rate (%) in Examples 2 and 6 to 8 with reference to Comparative Example 1. As shown in Table 2, it can be seen that in the samples according to Examples 6 to 8 in which an electron beam was applied while heating the sample, higher breaking strength than that of the sample according to Example 2 is achieved.

**(Table 2)**

| | | Example 2 | Example 6 | Example 7 | Example 8 |
|---|---|---|---|---|---|
| Raw material resin | | PEEK | PEEK | PEEK | PEEK |
| Irradiation conditions | Irradiation dose | 100kGy | 100kGy | 100kGy | 100kGy |
| | Temperature | Room temperature | 200°C | 250°C | 300°C |
| Ratio A'/B' | Surface layer portion | 1.10 | 1.10 | 1.16 | 1.27 |
| | Body portion | 0.99 | 1.03 | 1.06 | 1.20 |
| Fracture properties | Breaking strength | +9.0% | +9.3% | +13.9% | +29.6% |

Further, the sample according to Comparative Example 1 was subjected to heat treatment (annealing treatment) at 300°C to prepare a sample according to Comparative Example 2. That is, the sample according to Comparative Example 2 is the same as the sample according to Example 8 in that the molded body of the raw material resin is heated to 300°C but is different from the sample according to Example 8 in that no electron beam is applied.

A tensile test similar to that in Example 8 was conducted on the sample according to Comparative Example 2. Table 3 shows the breaking strength as the change rate (%) in Example 8 with reference to Comparative Example 2. As shown in Table 3, it can be seen that in the sample according to Example 8 in which an electron beam was applied while heating the sample, higher breaking strength than that of the sample according to Comparative Example 2 in which the sample was simply heated is achieved.

**(Table 3)**

| | | Comparative Example 2 | Example 8 |
|---|---|---|---|
| Raw material resin | | PEEK | PEEK |
| Irradiation conditions | Irradiation dose | - | 100kGy |
| | Temperature | - | 300°C |
| Heat treatment | Temperature | 300°C | - |
| Ratio A'/B' | Surface layer portion | 1.20 | 1.27 |
| | Body portion | 1.20 | 1.20 |
| Fracture properties | Breaking strength | Reference | +7.8% |

### [Other embodiments]

Although embodiments of the present invention have been described above, the present invention is not limited only to the above-mentioned embodiments and it goes without saying that various modifications can be made.

For example, in the present invention, the method of increasing the degree of crystallization of the surface layer portion of the aromatic polyetherketone molded body is not limited to irradiation of an electron beam. Examples of the other methods of increasing the degree of crystallization of the surface layer portion include laser irradiation, UV irradiation, excimer irradiation, plasma irradiation, corona irradiation, flame treatment, and chemical treatment.

## Claims

1. An aromatic polyetherketone molded body, comprising:
a body portion; and
a surface layer portion covering the body portion,
an infrared absorption spectrum being obtained by measurement using an infrared spectrophotometer for both the body portion and the surface layer portion, the infrared absorption spectrum including a peak A and a peak B, the peak A appearing in a wavenumber range of 1295 to 1340 cm⁻¹, the peak B appearing in a wavenumber range of 1265 to 1295 cm⁻¹,
a ratio A'/B' of strength A' of the peak A to strength B' of the peak B being higher in the surface layer portion than in the body portion.

2. The aromatic polyetherketone molded body according to claim 1, which is formed of at least one of polyetheretherketone or polyetherketone.

3. The aromatic polyetherketone molded body according to claim 1, which is formed of an aromatic polyetherketone including an additive.

4. The aromatic polyetherketone molded body according to any one of claims 1 to 3, which is configured as a sliding member.

5. The aromatic polyetherketone molded body according to claim 4, which is configured as a gear member.

6. A method of producing an aromatic polyetherketone molded body, comprising the steps of:
preparing a molded body from which an infrared absorption spectrum is obtained by measurement using an infrared spectrophotometer, the infrared absorption spectrum including a peak A and a peak B, the peak A appearing in a wavenumber range of 1295 to 1340 cm⁻¹, the peak B appearing in a wavenumber range of 1265 to 1295 cm⁻¹; and
applying an electron beam to a surface of the molded body.

7. The method of producing an aromatic polyetherketone molded body according to claim 6, wherein
the step of applying an electron beam includes increasing a ratio A'/B' of strength A' of the peak A to strength B' of the peak B in a surface layer portion of the molded body.

8. The method of producing an aromatic polyetherketone molded body according to claim 6 or 7, wherein
the step of applying an electron beam includes heating the molded body.
